Europäisches Patentamt

European Patent Office

Office européen des brevets

(19)

(11) Veröffentlichungsnummer: **0 217 253 B1**

(12) **EUROPÄISCHE PATENTSCHRIFT**

(45) Veröffentlichungstag der Patentschrift: **11.09.91**

(51) Int. Cl.5: **B32B 15/08, B32B 27/32**

(21) Anmeldenummer: **86113017.7**

(22) Anmeldetag: **22.09.86**

(54) Kunststoffolie.

(30) Priorität: **27.09.85 DE 3534400**

(43) Veröffentlichungstag der Anmeldung:
**08.04.87 Patentblatt 87/15**

(45) Bekanntmachung des Hinweises auf die
Patenterteilung:
**11.09.91 Patentblatt 91/37**

(84) Benannte Vertragsstaaten:
**BE DE FR GB IT NL**

(56) Entgegenhaltungen:
**EP-A- 0 023 389**
**EP-A- 0 175 259**
**EP-A- 0 177 872**
**EP-A- 0 199 228**

(73) Patentinhaber: **HOECHST AKTIENGESELL-
SCHAFT**
**Postfach 80 03 20**
**W-6230 Frankfurt am Main 80(DE)**

(72) Erfinder: **Crass, Günther, Dipl-Ing.**
**Bachstrasse 7**
**W-6204 Taunusstein-Hahn(DE)**
Erfinder: **Bothe, Lothar, Dr. Dipl.-Chem.**
**Am Heiligenhaus 9**
**W-6500 Mainz(DE)**
Erfinder: **Janocha, Siegfried, Dr. Dipl.-Chem.**
**Weinfeldstrasse 28**
**W-6200 Wiesbaden(DE)**
Erfinder: **Schlögl, Gunter, Dr. Dipl.-Phys.**
**Finkenweg 2**
**W-6233 Kelkheim(DE)**

**Beschreibung**

Die Erfindung betrifft eine Kunststofffolie für die Verpackung von Genuß- und Lebensmitteln aus einer koextrudierten, mehrschichtigen, biaxial gestreckten, opaken Polypropylenfolie.

Aus der DE-AS 28 14 311 sind derartige mehrschichtige, koextrudierte, biaxial gestreckte, opake Polypropylenfolien bekannt, deren Basisschicht im wesentlichen aus Polypropylen und Füllstoffen besteht. Die Opazität dieser Folien resultiert daher, daß sie eine große Anzahl von Hohlräumen (Vakuolen) besitzen, die beim Strecken der koextrudierten Folie entstanden sind. Beim Streckvorgang wird die Polymermatrix an den Korngrenzen der mit dem Polypropylen unverträglichen organischen oder anorganischen Füllstoffe aufgerissen, was zur Entstehung der genannten Vakuolen in der Folie, d.h. zu Hohlräumen in der Folie führt. Es versteht sich von selbst, daß diese Vakuolen oder Mikrohohlräume über das ganze Folienvolumen verteilt sind. Infolge der Beugung des Lichtes beim Übergang vom optisch dichteren Folienmaterial in die optisch dünneren Hohlräume zeigt die Folie eine opake Oberfläche, die ihr einen perlmuttartigen Glanz verleiht. Aufgrund der opaken oder perlmuttartigen Erscheinung besitzen diese Folien ein äußerst werbewirksames Aussehen. Da sie auch gut bedruckbar sind, werden sie vielseitig eingesetzt, insbesondere als Verpackungsfolien für die verschiedensten Anwendungszwecke, wobei vor allem die Schokoriegel-Verpackung zu nennen ist. Einer noch breiteren Verwendung der bekannten koextrudierten und biaxial gestreckten, opaken Polypropylen-Mehrschichtfolien stand bisher insbesondere ihr Nachteil entgegen, daß ihre Dichte noch immer relativ hoch ist, wodurch sie eine schlechte Knick- und Faltbarkeit aufweisen, die sie für verschiedene Verpackungszwecke wenig geeignet machen. Insbesondere bei der Verpackung von fetthaltigen Lebensmitteln wie Butter, hochwertiger Margarine und dgl. Fetten werden Verpackungsmaterialien bevorzugt, die gute Knickbarkeit und Faltbarkeit und ein metallisches, silber- oder goldähnliches Aussehen besitzen.

Aufgabe der Erfindung ist es, eine Kunststofffolie für die Verpackung von Genuß- und Lebensmitteln wie Butter, hochwertige Margarine u.dgl. zur Verfügung zu stellen, bei der die Kunststofffolie gegenüber bisher bekannten Mehrschicht-Polypropylenfolien für diese Zwecke eine wesentlich erhöhte Falt- und Knickbarkeit und ein optisch ansprechendes Aussehen aufweist.

Diese Aufgabe wird erfindungsgemäß dadurch gelöst, daß die Dichte der Polypropylenfolie maximal 0,60 g/cm³ ist, die eine Basisschicht aus Polypropylen und Füllstoffen mit einer Teilchengröße von 2 bis 5 μm aufweist, wobei die Menge an Füllstoff, bezogen auf Polypropylen, 10 bis 30 Gew.% beträgt, und daß die Polypropylenfolie auf zumindest einer Seite metallisiert ist.

In Ausgestaltung der Erfindung liegt die Dichte der Polypropylenfolie im Bereich von 0,40 bis 0,60 g/cm³.

Die Dicke der Polypropylenfolie beträgt 15 bis 80 μm, insbesondere 20 bis 60 μm.

Zweckmäßigerweise ist die Basisschicht der Polypropylenschicht pigmentiert. Die Metallisierung der Polypropylenfolie erfolgt durch Transfermetallisierung einer Metallschicht, die auf ein Fremdsubstrat aufgedampft ist. Eine andere Möglichkeit der Metallisierung besteht darin, daß die Polypropylenfolie direkt im Hochvakuum mit einer Metallschicht bedampft wird. Die Metallschicht ist dabei 0,001 bis 0,01 μm dick, wobei bevorzugt Aluminium die Metallschicht bildet.

Die Kunststofffolie nach der Erfindung wird insbesondere zum Verpacken von Butter, Schokolade, Kaugummi oder Zigaretten verwendet.

Die durch Koextrusion hergestellte, ein- oder beidseitig beschichtete und nacheinander in Längsrichtung bei einer Temperatur von 120 bis 130 °C und in Querrichtung bei einer Temperatur von 160 bis 170 °C gestreckte opake Polypropylenfolie hat eine Basisschicht, die im wesentlichen aus Polypropylen und Füllstoffen besteht. Die Menge an Füllstoff, bezogen auf Polypropylen, beträgt dabei 10 bis 30 Gew.-%. Der eingesetzte Füllstoff hat eine Teilchengröße von 2 bis 5 μm, und die Folie ist um das 5- bis 7fache längsgestreckt und um das 8-bis 10fache quergestreckt, so daß sie eine Dichte von maximal 0,60 g/cm³ aufweist. Eine Folie dieser Art ist aus der älteren europäischen Anmeldung EP-A - 0 177 872 bekannt. Die Folie enthält eine relativ große Menge an Füllstoff. Überraschend ist dabei, daß die Erhöhung der Füllstoffmenge zu der angestrebten Absenkung der Dichte beiträgt, nachdem sich durch diese Maßnahme nicht nur die Dichte der Polypropylen-Füllstoffmischung, aus der die Folie hergestellt wird, sondern auch der Grad der Dichteerniedrigung, das ist der prozentuale Unterschied der Dichtewerte der Polypropylen-Füllstoffmischung und der fertigen Folie, der üblicherweise bei 20 bis 40 % liegt, deutlich erhöht.

Bei der relativ großen Menge an Füllstoff war zu erwarten, daß eine Polypropylenfolie mit einem auf Kosten des Polymeranteils relativ hohen Füllstoffgehalt, wenn überhaupt, nur mit Schwierigkeiten herstellbar und insbesondere biaxial streckbar sein werde. Entgegen dieser Erwartung läßt sich die Folie jedoch überraschenderweise leicht herstellen und auch biaxial strecken. Ist die Füllstoffmenge kleiner als 10 Gew.-%, bezogen auf Polypropylen, so wird die angestrebte niedrige Dichte nicht erreicht. Ist sie andererseits größer als 30 Gew.-%, kann die Folie bei den genannten Bedingungen nicht mehr gestreckt werden. Analoges gilt auch für die Teilchengröße des pulverförmigen Füllstoffes. Neben der Füllstoffmenge und der Füllstoff-Teilchengröße müssen auch die Längs- und Querstreck-Verhältnisse im angegebenen Bereich liegen, damit die angestrebte Folie erhalten wird. Weitere Einzelheiten der Polypropylenfolie ergeben sich aus der deutschen Patentanmeldung P 34 36 961.9, in der auch das Verfahren zur Herstellung dieser Polypropylenfolie näher beschrieben ist. Für die Herstellung wird die Schmelze der die Basisschicht bildenden Polymermischung aus im wesentlichen Polypropylen und Füllstoff, wobei die Menge an Füllstoff, bezogen auf Polypropylen, 10 bis 30 Gew.-% beträgt, vorzugsweise 15 bis 25 Gew.-%, und der eingesetzte Füllstoff eine Teilchengröße von 2 bis 5 µm, vorzugsweise 3 bis 4 µm, hat, und die Schmelze des die Schichten bildenden Polymeren durch eine Flachdüse oder Runddüse koextrudiert, die durch Koextrusion erhaltene Folie durch Abkühlen verfestigt, anschließend bei einer Temperatur von 120 bis 130 °C im Verhältnis von 5 bis 7:1 längsgestreckt und bei einer Temperatur von 160 bis 170 °C im Verhältnis von 8 bis 10:1 quergestreckt und die biaxial gestreckte Folie thermofixiert.

Das Polypropylen der Basisschicht kann ein Homo- oder Copolymerisat des Propylens oder eine Mischung aus Propylen-Homo- und Propylen-Copolymerisaten sein. In den Copolymerisaten beträgt die Comonomermenge im allgemeinen maximal 10 Gew.-%, bezogen auf das Copolymerisat. Bevorzugte Comonomere sind Ethylen und Buten-(1).

Bei den Füllstoffen handelt es sich um die üblichen anorganischen oder organischen, mit Polypropylen unverträglichen, pulverförmigen Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat ist besonders bevorzugt. Die Füllstoffmenge beträgt erfindungsgemäß 10 bis 30 Gew.-%, vorzugsweise 15 bis 25 Gew.%, bezogen auf das Gewicht des vorhandenen Polypropylens. Die (mittlere) Teilchengröße des pulverförmigen Füllstoffes liegt erfindungsgemäß im Bereich von 2 bis 5 µm, vorzugsweise im Bereich von 3 bis 4 µm. Die Basisfolie (Basisschicht) kann auch zweckmäßige Additive wie Antioxidantien, Antistatika, Farbstoffe und/oder Stabilisatoren in einer jeweils wirksamen Menge enthalten.

Bei den Deckschichten handelt es sich in der Regel um heißsiegelfähige Schichten. Es kann sich auch um nichtsiegelbare Schichten handeln. Alle diese Schichten können ein- oder beidseitig vorliegen. Die Heißsiegelschicht besteht vorzugsweise aus einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponmente und Buten-(1), vorzugsweise in einer Menge von 10 bis 15 Gew.% (bezogen auf das Copolymerisat), einem Terpolymerisat aus Propylen als Hauptkomponente, Ethylen und einem α-Olefin mit 4 bis 10 Kohlenstoffatomen oder aus einer Mischung dieser Polymeren. Die Comonomeren sind in den Polymerisaten im wesentlichen statistisch verteilt (vgl. deutsche Auslegeschrift 28 14 311). Eine Beschichtung einer Deckschicht mit einer geeigneten Kaltsiegelschicht, bestehend aus Polymerisaten auf der Basis von natürlichem oder synthetischem Kautschuk, ist möglich.

Die nicht-siegelbare Deckschicht besteht vorzugsweise aus einem entsprechenden Propylen-Homopolymerisat.

Die Dicke der Heißsiegelschicht beträgt 0,1 bis 3 µm, vorzugsweise 0,5 bis 2 µm. Die nicht-siegelbaren Schichten weisen in der Regel ebenfalls eine solche Dicke auf.

Zum biaxialen Strecken der Folie kann zuerst in Längsrichtung und anschließend in Querrichtung oder zuerst in Querrichtung und dann in Längsrichtung gestreckt werden. Wesentlich ist, daß die Längs- und Querstreckung nacheinander und bei den angegebenen ausgewählten Temperaturen und Streckverhältnissen vorgenommen werden. Die Koextrusion der die Basisschicht bildenden Mischung und des die Deckschicht bildenden Polymeren mittels einer Flachdüse, das Abkühlen der koextrudierten Folie zu ihrer Verfestigung, das Wiedererhitzen der Folie auf die Strecktemperatur und die Längs- und Querstreckung werden in an sich bekannter Weise durchgeführt (vgl. deutsche Auslegeschrift 28 14 311). Das Abkühlen der Flachfolie zwecks Verfestigung und ihr Wiedererhitzen auf Strecktemperatur wird man mit Hilfe einer oder mehrerer Walzen vornehmen, die auf einer entsprechenden Temperatur gehalten werden. Die Längsstreckung der Folie wird man mit Hilfe zweier entsprechend dem angestrebten Streckverhältnis verschieden schnell laufender Walzenpaare durchführen und ihre Querstreckung mit Hilfe eines entsprechenden Kluppenrahmens. Es ist zweckmäßig, die Folie nach der ersten Streckung abzukühlen und auf dem Weg zur zweiten Streckung wieder auf die erforderliche Strecktemperatur zu bringen.

An die Streckung der Folie schließt sich ihre Thermofixierung (Wärmebehandlung) an. Auch diese wird in an sich bekannter Weise vorgenommen, nämlich bei einer Temperatur von vorzugsweise 150 bis 160 °C (etwa 0,5 bis 10 Sekunden lang).

Im folgenden sind zwei Beispiele für die Polypropylenfolie näher beschrieben.

### Beispiel 1

Es wurde eine Polypropylenfolie mit beidseitig vorhandenen heißsiegelfähigen Deckschichten bei etwa 270 °C durch eine Flachdüse koextrudiert. Die Mischung (Schmelze) der die Basisschicht bildenden Folie bestand aus 80 Gew.-% Propylen-Homopolymerisat und 20 Gew.-% pulverförmigem Calciumcarbonat mit einer mittleren Teilchengröße von 3,8 μm. Die Schmelze des die Deckschichten bildenden Polymeren bestand aus einem statistischen Copolymerisat von Propylen und 4 Gew.-% Ethylen. Nach dem Abkühlen der koextrudierten Folie mit einer Kühlwalze auf etwa 30 °C wurde die Folie bei 125 °C in Längsrichtung, Streckverhältnis 6,0, und dann bei 165 °C in Querrichtung, Streckverhältnis 9,0, gestreckt. Die anschließende Thermofixierung erfolgte bei 160 °C 5 Sekunden lang.

Die so erhaltene opake Polypropylen-Mehrschichtfolie hatte eine Dichte von 0,46 g/cm³ und eine Dicke von 35 μm, die Dicke der Heißsiegelschichten betrug jeweils 1 μm.

### Beispiel 2

Es wurde eine Polypropylenfolie mit beidseitig vorhandenen heißsiegelfähigen Deckschichten bei etwa 270 °C durch eine Flachdüse koextrudiert. Die Schmelze der die Basisschicht bildenden Folie bestand aus 75 Gew.-% Propylen-Homopolymerisat und 25 Gew.-% pulverförmigem Calciumcarbonat mit einer mittleren Teilchengröße von 3,2 μm. Die Schmelze des die Deckschichten bildenden Polymeren bestand aus dem in Beispiel 1 genannten Copolymerisat. Es wurde wie in Beispiel 1 vorgegangen, mit dem Unterschied, daß die Längsstreckung mit einem Streckverhältnis von 6,8 und die Querstreckung mit einem Streckverhältnis von 8,5 durchgeführt wurde.

Die so erhaltene opake Polypropylen-Mehrschichtfolie hatte eine Dichte von 0,42 g/cm³ und eine Dicke von 50 μm, die Dicke der Heißsiegelschichten betrug jeweils 1 μm.

Die gemäß den Beispielen 1 und 2 erhaltene opake, mehrschichtige Polypropylenfolie wurde einseitig metallisiert.

Die Metallisierung der Polypropylenfolie erfolgte in an sich bekannter Weise durch direktes Aufdampfen einer Metallschicht, beispielsweise aus Aluminium, Zink oder Al-Zn-Legierungen, im Hochvakuum auf die Polypropylenfolie oder durch Transfermetallisierung einer Metallschicht aus diesen Metallen, die auf ein Fremdsubstrat aufgedampft ist, das mit der Metallschicht auf die Polypropylenfolie aufgeklebt wird. Nach dem Aushärten des Klebers läßt sich das Fremdsubstrat von der Polypropylenfolie unter gleichzeitigem Transfer der Metallschicht auf die Polypropylenfolie abziehen.

Die aufgedampfte Metallschicht, wie z.B. Aluminium, war 0,008 μm dick.

Die metallisierten Polypropylenfolien aus den Beispielen 1 und 2 besitzen neben ihrem werbewirksamen Aussehen und guten Barriereeigenschaften ausgezeichnete Knick- und Falteigenschaften, die sie insbesondere für die Substitution von metallisiertem Papier als Verpackungsmaterial, und da wiederum zum Verpacken von Butter und sonstigen hochwertigen Speisefetten, geeignet machen. Ebenso ist die Folie für Schokoladenverpackung, Kaugummiverpackung und Zigaretteninnenverpackungen bestens geeignet.

### Patentansprüche

1. Kunststoffolie für die Verpackung von Genuß- und Lebensmitteln, aus einer koextrudierten, mehrschichtigen, biaxial gestreckten, opaken Polypropylenfolie, dadurch gekennzeichnet, daß die Dichte der Polypropylenfolie maximal 0,60 g/cm³ ist, die eine Basisschicht aus Polypropylen und Füllstoffen mit einer Teilchengröße von 2 bis 5 μm aufweist, daß die Menge an Füllstoff, bezogen auf Polypropylen, 10 bis 30 Gew.% beträgt, und daß die Polypropylenfolie auf zumindest einer Seite metallisiert ist.

2. Kunststoffolie nach Anspruch 1, dadurch gekennzeichnet, daß die Dichte der Polypropylenfolie im Bereich von 0,40 bis 0,60 g/cm³ liegt.

3. Kunststoffolie nach Anspruch 2, dadurch gekennzeichnet, daß die Dicke der Polypropylenfolie 15 bis 80 μm beträgt.

4. Kunststoffolie nach Anspruch 3, dadurch gekennzeichnet, daß die Dicke der Polypropylenfolie 20 bis 60 μm beträgt.

5. Kunststoffolie nach Anspruch 1, dadurch gekennzeichnet, daß die Basisschicht der Polypropylenfolie pigmentiert ist.

6. Kunststoffolie nach Anspruch 1, dadurch gekennzeichnet, daß die Metallisierung der Polypropylenfolie durch Transfermetallisierung einer Metallschicht, die auf ein Fremdsubstrat aufgedampft ist, erfolgt.

7. Kunststoffolie nach Anspruch 1, dadurch gekennzeichnet, daß die Polypropylenschicht direkt im Hochvakuum mit einer Metallschicht bedampft wird.

8. Kunststoffolie nach Anspruch 6 oder 7, dadurch gekennzeichnet, daß die Metallschicht 0,001 bis 0,01 $\mu$m dick ist.

9. Kunststoffolie nach Anspruch 8, dadurch gekennzeichnet, daß die Metallschicht aus Aluminium besteht.

10. Verwendung der Kunststoffolie nach den Ansprüchen 1 bis 9 zum Verpacken von Butter, Schokolade, Kaugummi oder Zigaretten.

**Claims**

1. Plastic film for packaging tobacco, confectionery and foodstuffs, comprising a coextruded multilayer, biaxially oriented, opaque polypropylene film, characterised in that the maximum density of the polypropylene film is 0.60 g/cm$^3$, the polypropylene film has a base layer comprising polypropylene and fillers having a particle size of from 2 to 5 $\mu$m, the amount of filler, based on polypropylene, is from 10 to 30 % by weight, and the polypropylene film is metallised on at least one side.

2. Plastic film according to Claim 1, characterised in that the density of the polypropylene film is in the range from 0.40 to 0.60 g/cm$^3$.

3. Plastic film according to Claim 2, characterised in that the thickness of the polypropylene film is from 15 to 80 $\mu$m.

4. Plastic film according to Claim 3, characterised in that the thickness of the polypropylene film is from 20 to 60 $\mu$m.

5. Plastic film according to Claim 1, characterised in that the base layer of the polypropylene film is pigmented.

6. Plastic film according to Claim 1, characterised in that the polypropylene film is metallised by transfer metallisation of a metal layer vapour-deposited onto a foreign substrate.

7. Plastic film according to Claim 1, characterised in that the metal layer is vapour-deposited directly onto the polypropylene layer in a high vacuum.

8. Plastic film according to Claim 6 or 7, characterised in that the metal layer is from 0.001 to 0.01 $\mu$m thick.

9. Plastic film according to Claim 8, characterised in that the metal layer comprises aluminium.

10. Use of the plastic film according to Claims 1 to 9 for packaging butter, chocolate, chewing gum or cigarettes.

**Revendications**

1. Pellicule de matière plastique pour l'emballage de produits alimentaires et de friandises, constituée d'une pellicule de polypropylène opaque coextrudée, multicouche, étirée biaxialement, caractérisée en ce que la densité de la pellicule de polypropylène est au maximum de 0,60 g/cm$^3$, pellicule qui comporte une couche de base constituée de polypropylène et de charges ayant une taille de particules de 2 à 5 $\mu$m, en ce que la quantité de charge, par rapport au polypropylène, va de 10 à 30 % en poids et en ce que la pellicule de polypropylène est métallisée sur au moins un côté.

2. Pellicule de matière plastique selon la revendication 1, caractérisée en ce que la densité de la pellicule de polypropylène se situe dans la plage de 0,40 à 0,60 g/cm$^3$.

3. Pellicule de matière plastique selon la revendication 2, caractérisée en ce que l'épaisseur de la pellicule de polypropylène va de 15 à 80 $\mu$m.

4. Pellicule de matière plastique selon la revendication 3, caractérisée en ce que l'épaisseur de la pellicule de polypropylène va de 20 à 60 $\mu$m.

5. Pellicule de matière plastique selon la revendication 1, caractérisée en ce que la couche de base de la pellicule de polypropylène est pigmentée.

6. Pellicule de matière plastique selon la revendication 1, caractérisée en ce que la métallisation de la pellicule de polypropylène est effectuée par métallisation par transfert d'une couche de métal qui est appliquée par vaporisation sur un support temporaire.

7. Pellicule de matière plastique selon la revendication 1, caractérisée en ce que la couche de polypropylène est revêtue directement d'une couche de métal par vaporisation sous vide poussé.

8. Pellicule de matière plastique selon la revendication 6 ou 7, caractérisée en ce que la couche de métal a une épaisseur de 0,001 à 0,01 μm.

9. Pellicule de matière plastique selon la revendication 8, caractérisée en ce que la couche de métal est constituée d'aluminium.

10. Utilisation de la pellicule de matière plastique selon les revendications 1 à 9, pour le conditionnement de beurre, chocolat, chewing-gum ou cigarettes.